# EUROPÄISCHE PATENTSCHRIFT

(11) **EP 0 400 313 B1**
(45) Veröffentlichungstag und Bekanntmachung des Hinweises auf die Patenterteilung: **03.04.1996**
(21) Anmeldenummer: 90107158.9
(22) Anmeldetag: 14.04.1990
(51) Int. Cl.: H01H 23/30, H01H 23/08, H02B 1/42

(54) **Mehrfachtastschalter**
Multiple push-button switch
Commutateur à touche multiple

(30) Priorität: 31.05.1989 DE 3917637
(43) Veröffentlichungstag der Anmeldung: 05.12.1990
(73) Patentinhaber: Priesemuth, Wolfgang, Dipl.-Ing., D-25524 Breitenburg-Nordoe (DE)
(72) Erfinder: Priesemuth, Wolfgang, Dipl.-Ing., D-25524 Breitenburg-Nordoe (DE)
(74) Vertreter: Barske, Heiko, Dr. rer. nat.

(56) Entgegenhaltungen:
- DE-C- 1 092 983
- DE-U- 8 408 935
- FR-A- 2 622 046
- US-A- 2 916 566

## Beschreibung

Die Erfindung betrifft einen Tastschalter mit zwei von einer Ruhestellung aus mittels einer betätigbaren Wipptaste einnehmbaren Schaltstellungen, insbesondere für die Betätigung von Fenstern in Kraftfahrzeugen, umfassend ein auch der Aufnahme von Schaltelementen dienendes Gehäuse, wobei die Schaltelemente mit Schaltkontakten versehene Schaltfedern aufweisen, und daß wenigstens zwei mittels je einer gesonderten Wipptaste betätigbare gesonderte Schaltelemente im Gehäuse aufgenommen sind.

Ein Tastschalter dieser Art ist bekannt (FR-A-2 622 046). Dieser bekannte Tastschalter weist zwei feste Kontakte auf, die von zwei Bügeln getragen werden, die sich unter eine Basiswandung verlängern und dort zwei Lamellenanschlüsse für die Verbindung mit der elektrischen Schaltung eines Kraftfahrzeuges bilden. Mit dem bekannten Schalter soll ein Schalter mit kurzem Bewegungsweg und schneller Schnappbewegung geschaffen werden, der beim Schalten eine relative Gleitbewegung der Kontakte bewirkt, die ein Reinigen der Kontakte gewährleisten sollen.

Insbesondere für im Automobilbau verwendete elektrische Schalter dieser Art für die Ausführung verschiedenster Funktionen gilt, daß diese aufgrund des ungeheuren Kostendrucks in der Automobilindustrie extrem kostengünstig herstellbar sein müssen. In Anbetracht der Tatsache, daß die Konsole eines Kraftfahrzeuges, insbesondere die eines Personenkraftfahrzeuges zwischen Fahrer- und Beifahrersitz, in zunehmendem Maße neben Schaltern zur Betätigung von Fenstern auch zur Aufnahme anderer, zusätzlicher Komponenten wie eines Autotelefons oder eines neuerdings in Kraftfahrzeugen Anwendung findenden Bordcomputers genutzt werden soll, ist zusätzlicher Platz erforderlich, da derartige Komponenten, genauso wie die für den eigentlichen Betrieb des Kraftfahrzeuges zwingend notwendigen Komponenten, genauso gut vom Fahrer- bzw. Beifahrersitz aus zugänglich sein sollen.

Neben dem verhältnismäßig komplizierten, eine Vielzahl von zusätzlichen Teilen umfassenden Einbau bisheriger bekannter Schalter, benötigen die bekannten Schalter nachteiligerweise verhältnismäßig viel Platz, der aufgrund der ebenfalls vorangehend genannten Gründe (erforderlicher Platz für andere Komponenten) grundsätzlich nicht mehr vorhanden ist.

Aus der DE-U-84 08 935 ist ein Tastschalter dieser Art bekannt, bei dem zwischen den Schaltfedern und den übrigen Kontakteinrichtungen einerseits und den durch das Gehäuse hindurchtretenden Kontaktzungen andererseits Nietverbindungen vorgesehen sind. Diese Nietverbindungen stellen erhebliche Fehlerquellen dar, die die Betriebssicherheit des Tastschalters, der an einer sicherheitsrelevanten Einrichtung des Kraftfahrzeuges eingesetzt werden kann, erheblich reduzieren können. Ein weiterer wesentlicher Nachteil dieses bekannten Tastschalters besteht darin, daß dort durch die Notwendigkeit des Einbringens der entsprechenden Nietwerkzeuge in das Schaltergehäuse bzw. in die Nähe des Tastschalters ein beträchtlicher Raum erforderlich ist, so daß der bekannte Tastschalter nur verhältnismäßig groß auszubilden ist und somit eine Unterbringung mehrerer Tastschalter dieser Art in einer Konsole eines Kraftfahrzeuges zwischen dem Fahrersitz und dem Beifahrersitz aufgrund des gestiegenen Platzbedarfs für andere Zwecke nicht mehr ohne weiteres möglich ist.

Es ist Aufgabe der vorliegenden Erfindung, einen Tastschalter, insbesondere einen für die Betätigung von Fenstern in Kraftfahrzeugen zu schaffen, der preisgünstig in der Herstellung, einfach im Aufbau, und in seinen äußeren Dimensionen gegenüber bekannten Schaltern dieser Art erheblich vermindert ist.

Gelöst wird die Aufgabe gemäß der Erfindung dadurch, daß Schaltfederhalter einstückig mit einer aus dem Gehäuse herausgeführten Steckereinrichtung verbunden sind.

Der Vorteil des erfindungsgemäß ausgestalteten Tastschalters besteht im wesentlichen darin, daß dieser eine grundsätzlich einheitlich handhabbare Einheit ist und dieser somit mit einem einzigen Anschußvorgang und mit einem einzigen Montagevorgang in die Konsole eingesetzt und elektrisch verbunden werden kann. Es sind keine Befestigungsrahmen und Abdeckrahmen nötig, die, wie bei bekannten einzelnen Schaltern, dann die Schalter zueinander positionieren und Montageschlitze abdecken müssen. Aufgrund der erfindungsgemäßen Konstruktion kann aufgabengemäß der Schalter extrem klein ausgebildet werden, da eine Gehäusewandung nur einmal erforderlich ist und in einem einzigen Herstellungsvorgang der gesamte Schalter hergestellt werden kann, wodurch das aufgabengemäße Ziel, nämlich die preisgünstige Herstellbarkeit, in vollem Maße erreicht wird.

Ein weiterer wesentlicher Vorteil des erfindungsgemäßen Tastschalters ist die ergonomisch besonders wichtige und tatsächlich erreichte dichte Anordnung beider Wipptasten nebeneinander, um es beispielsweise dem Fahrer eines Kraftfahrzeuges zu ermöglichen, durch einfaches Übergleiten der Finger von einer Wipptaste zur anderen ohne Schwierigkeiten und ohne hinsehen zu müssen den Vorgang des Hebens und des Senkens des einen oder des anderen Fensters veranlassen zu können, da der Fahrer während des Fahrvorganges nicht nach unten oder zur Seite schauen sollte, um für die Betätigung des einen oder des anderen Fensters erst den jeweiligen Schalter bzw. die an dem Schalter angeordnete Wipptaste zu suchen.

Dadurch, daß der Schaltfederhalter einstückig mit einer aus dem Gehäuse herausgeführten Steckereinrichtung (Kontaktzunge) verbunden ist, ist es möglich, die Herstellungskosten des Tastschalters so gering wie möglich zu halten.

Gemäß einer weiteren vorteilhaften Ausgestaltung der Erfindung können vier mittels je einer gesonderten Wipptaste betätigbare gesonderte Schaltelemente im Gehäuse aufgenommen sein, wobei eine derartige Ausgestaltung bei ansonsten gleichem Aufbau, wie vorangehend beschrieben, dann vorgesehen wird, wenn im Kraftfahrzeug beispielsweise vier Fenster zu heben und zu senken sind und diese Funktion ebenfalls von der Konsole zwischen Beifahrer- und Fahrersitz aus gesteuert werden soll. In der Regel werden dabei die beiden Schaltelemente bzw. Wipptasten für die beiden vorderen Fenster des Kraftfahrzeuges nebeneinander und die für die Betätigung der beiden hinteren Fenster vorgesehenen Wipptasten bzw. Schaltelemente ebenfalls nebeneinander angeordnet sein, wobei jeweils beide Wipptastenpaare bzw. Schaltelementpaare jeweils hintereinander angeordnet sind, was auch der Plazierung der jeweiligen Fenster im Kraftfahrzeug entspricht.

Wie eingangs erwähnt, müssen elektrische Schalter, die im Automobilbau verwendet werden, einen verhältnismäßig einfachen Aufbau aufweisen, um kostengünstig herstellbar zu sein. Die extrem kostengünstige Herstellbarkeit darf jedoch keineswegs durch Einbußen in der Betriebssicherheit erreicht werden, zumal die Schalter im Automobilbau in der Regel äußerst wichtige Schaltaufgaben, wie das beschriebene Anheben und Absenken von Fenstern, daß Schalten der Beleuchtung usw. haben, die in höchstem Maße sicherheitsrelevant sind. Einher mit dem Zwang zur Miniaturisierung der Schalter gehen steigende Anforderungen an die Betriebssicherheit. Erfindungsgemäß wird ein einfacher Aufbau und eine extreme Betriebssicherheit bei äußerst geringen Dimensionen dadurch erreicht, daß die im wesentlichen eben ausgebildeten Schaltfedern durch im wesentlichen rechtwinklig zu diesen angeordnete, als Stößel wirkende Betätigungselemente, die gelenkig an der Wipptaste angelenkt sind, beaufschlagt werden. Dadurch können die Schaltelemente in den unteren Bereich verlagert werden, wobei die Schaltelemente über als Stößel wirkende Betätigungselemente von der Wipptaste, die verhältnismäßig weit von den Schaltelementen entfernt angeordnet sein kann, betätigt werden. Die Schalter bzw. die Schaltelemente können zudem funktionsfertig vormontiert werden, was gleichermaßen für die Version mit vier Schaltelementen bzw. Wipptasten und die Version mit zwei Schaltelementen bzw. Wipptasten gilt, was für eine kostengünstige Herstellbarkeit äußerst wichtig ist, wobei nach Art eines Baukastensystemes die übrigen Teile des Schalters montiert werden können.

Die Betätigungselemente können prinzipiell beliebig, soweit sie geeignet sind, den freien Weg zwischen der Wipptaste und den Schaltfedern zu überbrücken, ausgebildet sein, vorteilhafterweise sind die Betätigungselemente jedoch in Form flacher Plättchen ausgebildet, die in einem einfachen Stanzvorgang beispielsweise aus Metall auf sehr einfache Weise hergestellt werden können. Vorteilhafterweise werden die Betätigungselemente an zwei gegenüberliegenden Seiten in Führungen, die integral mit dem Gehäuse ausgebildet sein können, längsverschieblich aufgenommen, was wiederum den Vorteil hat, daß bei der Montage nach Art eines Baukastensystems die Plättchen geführt aufgenommen werden und eine Justage bei der Montage oder ein komplizierter Zusammenbauvorgang nicht erforderlich ist.

Ein besonders kritischer Punkt in Schaltern dieser Art sind die eigentlichen Schaltfedern, insbesondere dann, wenn, wie im vorliegenden Fall, sehr hohe Ströme über die Kontakte geführt werden, wie sie beispielsweise beim Betrieb von Motoren zum Heben und Senken von Fenstern der Kraftfahrzeuge auftreten. Aus Kostengründen werden diese Ströme unmittelbar über die Kontakte der Schalter geleitet und nicht, wie früher üblich, über gesonderte Relais, die mit den Tastern lediglich betätigt werden. Bei den ersten Versuchen mit Schaltern der erfindungsgemäßen Art, bei denen die Ströme von Fensterbetätigungsmotoren unmittelbar über die Schalterkontakte geleitet wurden, zeigte sich, daß diese bei der Ausführung der Schaltfunktion hin und her schleuderten, was zwangsweise zu einem nicht gewollten alternierenden Einschalten der Motoren führte und zudem sehr schnell die Kontakte der Schaltfedern verschliß. Erfindungsgemäß wird zur Lösung dieses Problems vorteilhafterweise vorgeschlagen, daß die Schaltfedern eine im wesentlichen rechteckige, rahmenförmig ausgebildete Grundfläche aufweisen, wobei in den materialfreien Innenbereich von einer Schmalseite der Schaltfeder ein im Querschnitt wellenförmig ausgebildeter Steg hineinsteht. Dieser Steg sorgt für eine geeignet eingestellte Vorspannung der Schaltfeder, so daß wunsch- bzw. bestimmungsgemäß ein bestimmter, von der Betätigungskraft der Wipptaste unabhängiger ausreichender Minimaldruck der schaltfederseitigen Kontakte auf entsprechende Gegenkontakte bei Betätigung des Wippschalters ausgeübt wird. Dieser Minimaldruck ist ausreichend, um das bei den bekannten Schaltern dieser Art auftretende Hin- und Herschleudern der Schaltfeder vollständig auszuschließen.

Gemäß einer weiteren vorteilhaften Ausgestaltung der Erfindung wird zwischen dem freien Ende des Stegs und der anderen Schmalseite der Schaltfeder der Schaltfederhalter ergriffen, wobei der Schaltfederhalter vorteilhafterweise durch zwei Rasteinrichtungen aufweisende Haltestege des Schaltfederhalters gehalten wird. Auf diese Weise ist eine sehr einfache Montage der Schaltfeder und eine sichere Lagerung der Schaltfeder im montierten Zustand möglich, wobei in Verbindung mit dem vorrangehend erwähnten wellenförmig ausgebildeten Steg der Schaltfeder eine Selbstjustage bei der Montage der Schaltfeder und eine automatische Einstellung der Spannung der Schaltfeder erreicht wird. Die Rasteinrichtungen im Schaltfederhalter sind dabei vorteilhafterweise durch im wesentlichen parallel zur Schaltfeder verlaufende Haltevertiefungen des Schaltfederhalters gebildet.

Auch ist es vorteilhaft, daß die übrigen Kontakte, an denen die mit Kontakten versehenen Schaltfedern im aktiven und passiven Zustand anliegen, durch das Gehäuse an der der Wipptaste gegenüberliegenden Seite in Form von in eine Buchseneinrichtung einbringbaren Steckereinrichtungen hindurchtreten. Alle Kontakteinrichtungen einschließlich der Schaltfederhalter können somit einstückig mit Steckereinrichtungen bzw. Kontakteinrichtungen ausgebildet sein und treten durch entsprechende vorgesehene Löcher im Gehäuse nach außen.

Dabei sind die Steckereinrichtungen vorteilhafterweise durch einen im wesentlichen zu diesen parallelen Mantel umgeben, wobei der Mantel einerseits dem Schutz der Steckereinrichtungen und andererseits der Führung der Steckereinrichtungen in eine Buchseneinrichtung dient.

Vielfach ist es erforderlich, die momentane Betätigungsfunktion des Tastschalters anzuzeigen, insbesondere dann, wenn es dunkel ist. In den meisten Fällen wurden dazu vom Schalter gesonderte Leuchteneinrichtungen vorgesehen, die vielfach gesondert montiert oder an der geeigneten Stelle bei Anbringen des Tastschalters im Montagebereich zusätzlich vorgesehen werden mußten. Vorzugsweise ist beim erfindungsgemäßen Tastschalter im Bereich zwischen dem Schaltelement und der Wipptaste ein Leuchtelement in einem schalenförmigen, zur Wipptaste hin offenen Reflektor vorgesehen, was den Vorteil hat, daß das Leuchtelement selbst bei der Montage des Tastschalters ebenso wie der Reflektor leicht eingesetzt werden kann und keine gesonderte, verteuernde Buchse oder Fassung für das Leuchtelement vorgesehen zu werden braucht. Als Leuchtelement eignet sich beispielsweise sehr gut eine in den verschiedensten Farben verfügbare Leuchtdiode, die gegenüber herkömmlichen Glühbirnen den Vorteil hat, daß sie bei guter Leuchtkraft eine sehr geringe Stromaufnahme und eine sehr geringe Verlustleistung zeigt, d.h. eine unnötige Wärmeentwicklung vermieden wird.

Schließlich ist es vorteilhaft, daß die Schaltelemente selbst von einem mit dem Gehäuse beispielsweise verklippbaren oder auf sonstige Weise mit ihm verbindbaren Mantel umgeben sind. Dadurch wird die Montage des Tastschalters erheblich erleichtert und verbilligt, da dann, wenn der Mantel während des Montagevorganges noch nicht vorhanden ist, die einzelnen Schaltelemente, sei es automatisch oder manuell, verhältnismäßig einfach plaziert werden können, da ein durch einen Mantel nicht gestörter Zugriff in den Bereich der Schaltelemente von außen möglich ist. Erst dann, wenn der Montagevorgang einschließlich der Montage der Wipptaste abgeschlossen ist, kann über die Wipptaste bzw. von der Seite der Wipptaste her der Mantel auf das Gehäuse geschoben und mit ihm durch verklippen oder auf andere Weise verbunden werden. Der Tastschalter ist nach dem Verbinden des Mantels mit dem Gehäuse fertigmontiert und zum Einbau in das Kraftfahrzeug oder andere Aufnahmeorte fertig.

Vielfach ist in Kraftfahrzeugen, die elektrisch betriebene Fensterheber aufweisen, ein gesonderter Sperrschalter vorgesehen, der von der Fahrer- oder Beifahrerseite aus bedient werden kann, um sicherzustellen, daß im Fond des Kraftfahrzeug sitzende Personen, insbesondere Kinder, die im Fond angeordneten parallelen Tastschalter zur Betätigung der hinteren Fenster nicht ohne weiteres bedienen können, was im weitesten Sinne auch der Unfallverhütung dient. Die Sperrschalter sind in der Regel zu den Tastschaltern zur Betätigung der Fenster angeordnete gesonderte Schalter, die wiederum zwar den Tastschaltern wegen der die Tastschalter partiell unterbrechenden Funktion zugeordnet sind, gleichwohl müssen sie in der Regel gesondert hergestellt, montiert und abgedeckt werden und erfordern zusätzlichen Platz. Aus diesem Grunde ist es vorteilhaft, daß der Tastschalter in seinem Gehäuse selbst einen Sperrschalter zur elektrischen Sperrung eines oder mehrerer vom ersten Tastschalter abgesetzten( r) Tastschalters (Tastschalter) aufweist. Dieser Sperrschalter kann somit integral mit dem Tastschalter ausgebildet werden und erfordert keinen zusätzlichen Platz in der Konsole und es ist es keine zusätzliche gesonderte Montage und kein Anschluß gesonderter Art erforderlich.

Um den Schaltzustand des Sperrschalters dem Fahrer bzw. Beifahrer anzeigen zu können, ist dem Sperrschalter im Gehäuse ein Leuchtelement zugeordnet, das beispielsweise aufleuchtet, wenn die im Fond des Kraftfahrzeuges angeordneten Tastschalter zur Betätigung der Fenster verriegelt sind, und das erloschen ist, wenn auch die im Fond angeordneten Tastschalter einzeln bedienbar sind.

Die Erfindung wird nun unter Bezugnahme auf die nachfolgenden schematischen Zeichnungen anhand eines Ausführungsbeispieles eingehend beschrieben. Diese zeigen:
- Fig. 1: den Schalter in der Ansicht auf seine Breitseite,
- Fig. 2: den Schalter in der Ansicht auf seine Schmalseite,
- Fig. 3: den Schalter in der Ansicht von unten auf die Steckereinrichtungen,
- Fig. 4: den Schalter in der Ansicht von oben auf die Wipptasten,
- Fig. 5: in gegenüber der Darstellung von Fig. 1 vergrößertem Maßstab eine Ansicht in einem Teilschnitt zur Darstellung der Drehpunkte der Wipptasten,
- Fig. 6: einen Teil des Schalters gemäß Fig. 5 im Schnitt unter Weglassung unwichtiger Details zur Darstellung und Erklärung der Funktion der Schaltelemente,
- Fig. 7: eine Draufsicht auf eine von einem Schaltfederhalter gehaltene Schaltfeder, die von einem Betätigungselement beaufschlagt wird,

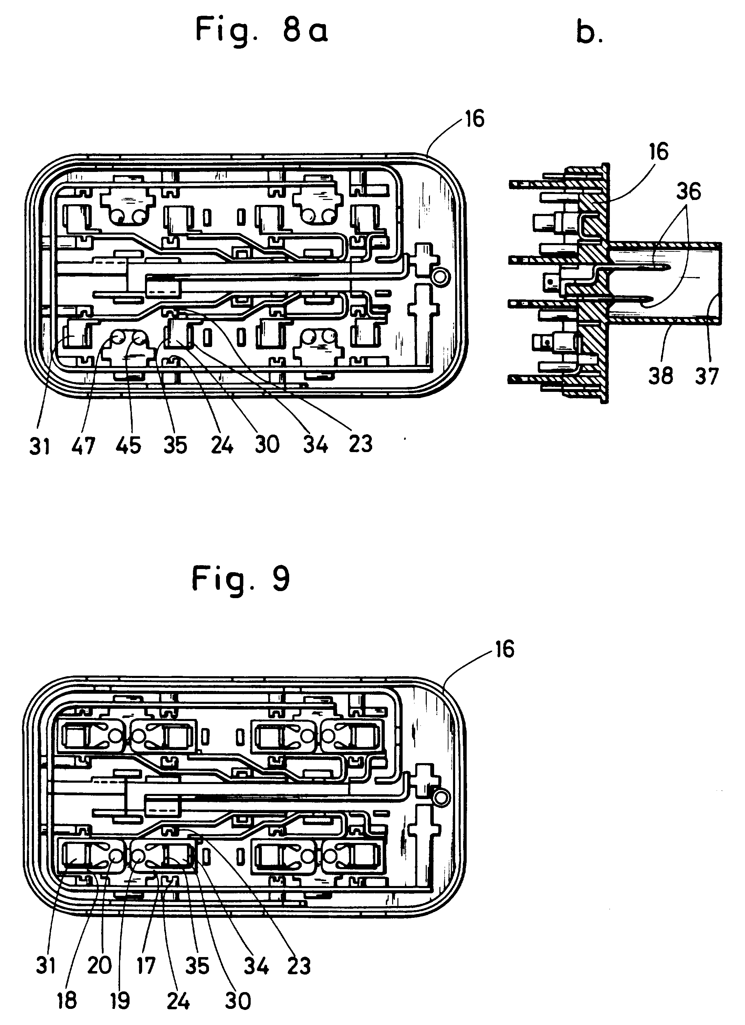

- Fig. 8a: einen Schnitt durch das Gehäuse des Schalters in der Draufsicht in einem ersten Montagezustand,
- Fig. 8b: einen Schnitt durch die Darstellung von Fig. 8a in der Seitenansicht,
- Fig. 9: einen Schnitt durch das Gehäuse des Schalters in der Draufsicht in einem zweiten Bestückungszustand, bei dem die Schaltfedern montiert sind,

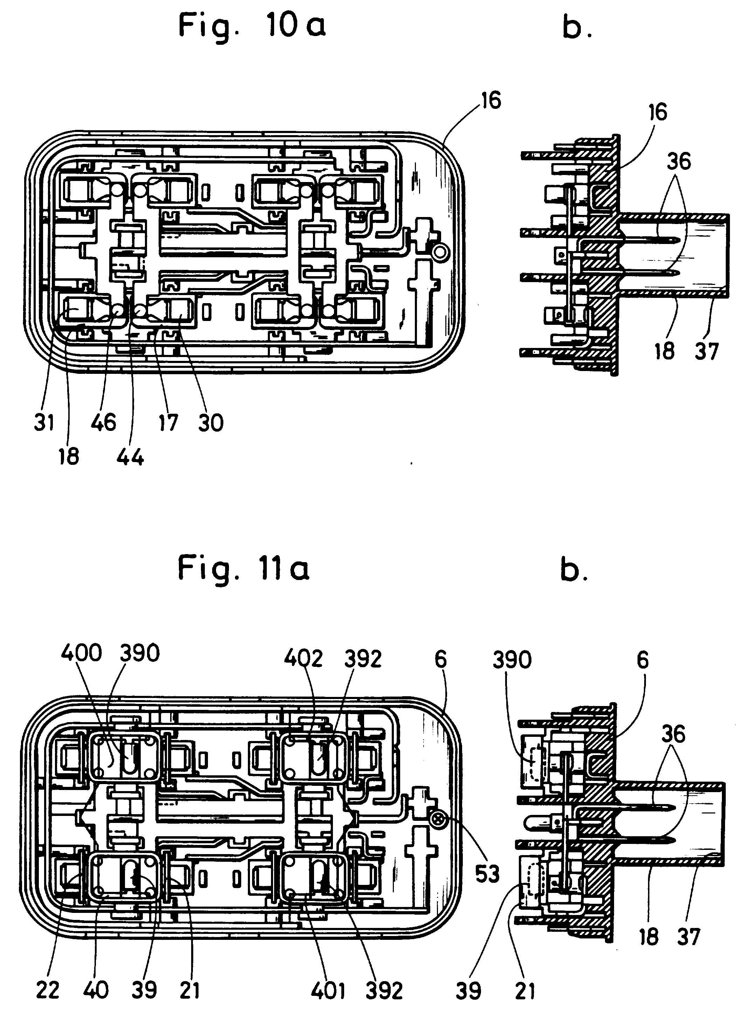

- Fig. 10a: einen Schnitt durch das Gehäuse des Schalters in der Draufsicht in einem dritten Bestückungszustand,
- Fig. 10b: einen Schnitt durch die Darstellung von der Fig. 10a in der Seitenansicht,

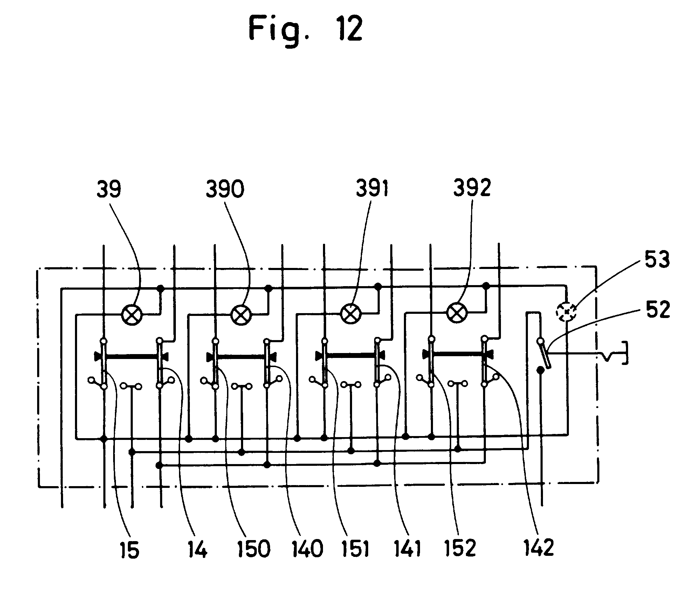

- Fig. 11a: einen Schnitt durch das Gehäuse des Schalters in einem vierten Bestückungszustand,
- Fig. 11b: einen Schnitt durch die Darstellung von Fig. 11a in der Seitenansicht,
- Fig. 12: das Schaltbild eines Mehrfachtastschalters mit zusätzlich vorhandenem Sperrschalter sowie den Wipptastern und dem Sperrschalter zugeordneten Leuchtelementen.

Bei der in den Figuren dargestellten Ausführungsformen des Tastschalters 10 handelt es sich um einen solchen, der vier gesonderte Wipptasten 11, 110, 111, 112 mit jeweils vier ihnen gesondert zugeordneten Schaltelementen 14, 15, 140, 150; 141, 151; 142, 152 aufweist. Da die vier Wipptasten bzw. die ihnen zugeordneten Schaltelemente einen grundsätzlich gleichen Aufbau haben, wird im folgenden lediglich eine Wipptaste 11 in Verbindung mit den ihr zugeordneten Schaltelementen 14, 15 beschrieben.

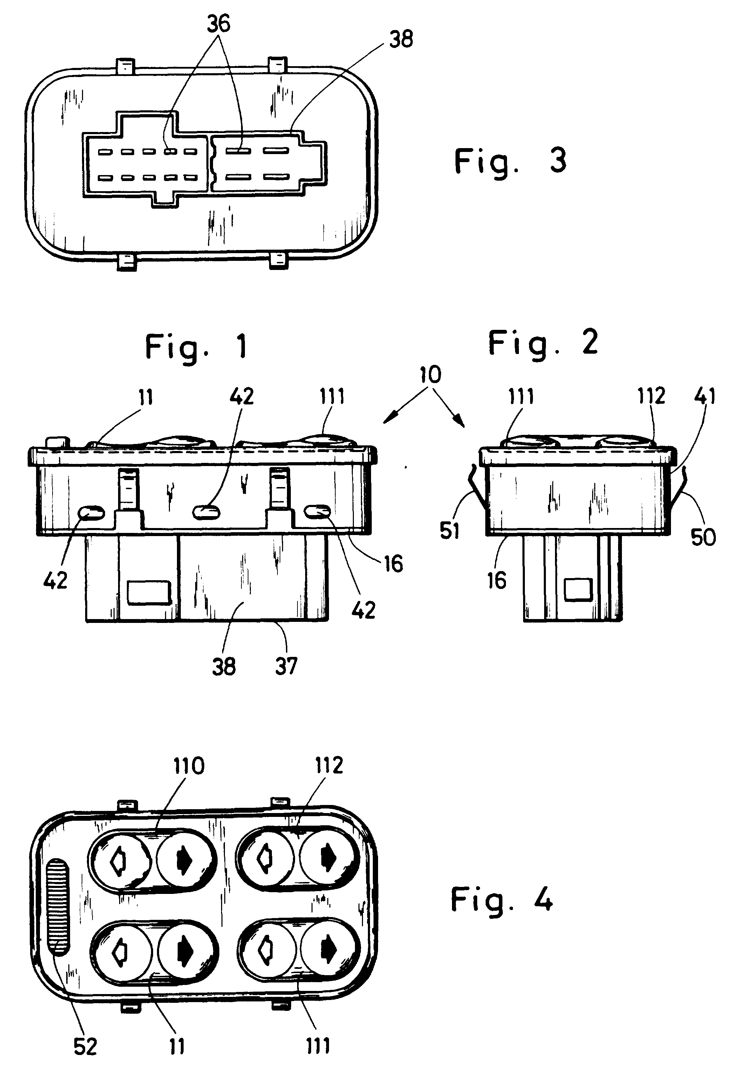

Der Tastschalter 10 besteht im wesentlichen aus einem Gehäuse 16, das in seinem Inneren der Aufnahme und Halterung von Schaltelementen 14, 15 dient, sowie einer Wipptaste 11, mit der die Schaltelemente 14, 15 aus einer Ruhestellung heraus in zwei Endstellungen 12, 13 betätigbar sind. Die Wipptaste 11 ist dabei um eine Achse 43 bzw. im Gehäuse 16 ausgebildeten entsprechenden Lagern, die hier nicht gesondert dargestellt sind, drehbar. Bei den Lagern handelt es sich um im wesentlichen im Gehäuse 16 an geeigneter Stelle ausgebildete geeignete Löcher, in die entsprechende Vorsprünge, die in der Wipptaste 11 ausgebildet sind, eingreifen, und die, ebenso wie die Lager, nicht gesondert dargestellt sind. Das Gehäuse 16 ist im Bereich der Wipptaste 11 und der Schaltelemente 14, 15 durch eine mantelförmige Umhüllung 41 umgeben, die über Klippverbindungen 42 mit dem Gehäuse 16 verbindbar ist. Nach der endgültigen Montage des Tastschalters 10 wird der Mantel 41 von oben, vgl. Fig. 1, über die Wipptaste 11 geschoben und mit den vorerwähnten Klippverbindungen 42 verrastet.

Ober mit dem Gehäuse 16 fest verbundenen Klippfedern 50, 51 kann der Taster 10 an einem Aufnahmeort, beispielsweise eine Konsole im Kraftfahrzeug zwischen dem Fahrer und Beifahrersitz, verrastet werden, so daß gesonderte Befestigungsmittel nicht erforderlich sind.

Der untere Bereich, d.h. die Unterseite 37, vgl. Fig. 1 und 3, des Tastschalters 10 ist steckerförmig ausgebildet, d.h. er weist eine Mehrzahl von Steckereinrichtungen 36 auf, die mit entsprechenden Kontakten der Schaltelemente 14, 15 verbunden bzw. einstückig mit diesen ausgebildet sind, was im einzelnen noch weiter unten beschrieben wird. Die aus dem Gehäuse 16 an der Unterseite 37 herausstehenden Steckereinrichtungen 36 sind, ähnlich wie der das Gehäuse 16 oben umgebende Mantel 41, mit einem Mantel 38 umgeben, der im wesentlichen parallel zu den zungenförmig ausgebildeten Steckereinrichtungen 36 ausgebildet ist. Der Mantel 38 ist jedoch im Gegensatz zum Mantel 41 integral mit dem Gehäuse 16 verbunden. Die Anzahl der Steckereinrichtungen 36 richtet sich um wesentlichen nach der Anzahl der in der ersten und zweiten Schaltstellung zu schließenden bzw. öffnenden Stromkreise, d.h. die Schaltelemente 14, 15 können im einzelnen wahlweise als Öffner oder Schließer oder beides festgelegt werden.

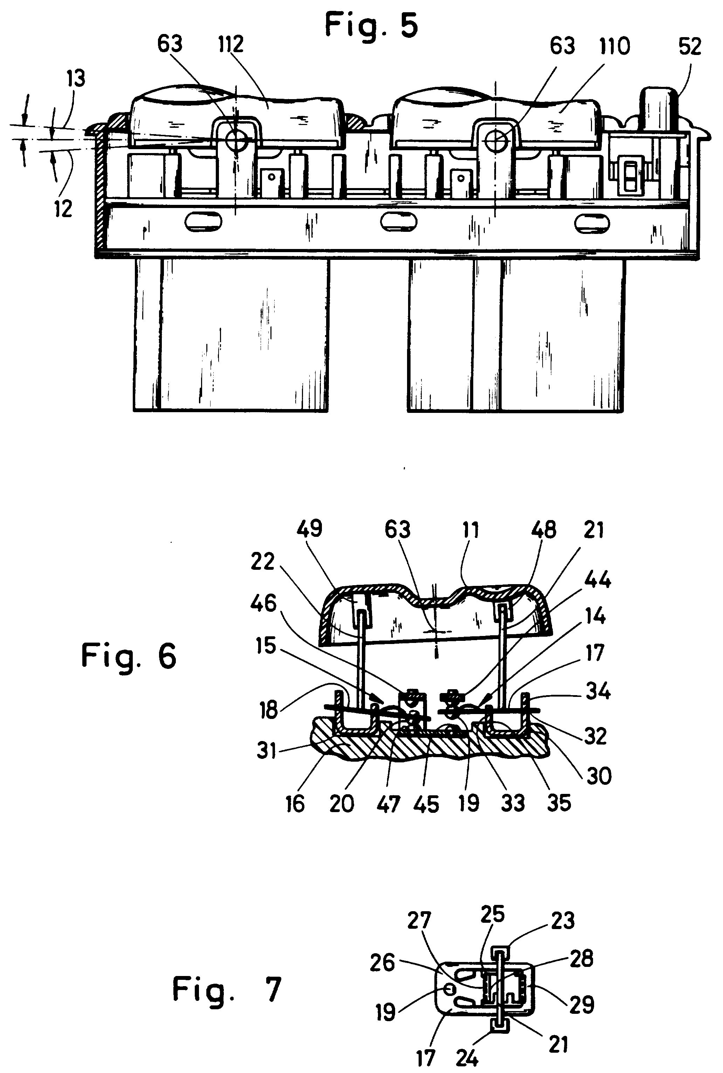

Im Bereich des Bodens des Gehäuses 16 sind an gegenüberliegenden Seiten wenigstens jeweils Schaltfederhalter 30, 31 angeordnet, die zwei U-förmig ausgebildete Haltestege 34, 35 aufweisen. Die Haltestege 34, 35 und der Schaltfederhalter 30, 31 sind im vorliegenden Ausführungsbeispiel integral mit den jeweiligen dazu gehörenden Stekkereinrichtungen 36 verbunden. Es sei aber erwähnt, daß eine derartige einstückige Ausbildung der Schaltfederhalter 30, 31 nicht in jedem Falle erforderlich ist. Die Haltestege 34, 35 weisen Rasteinrichtungen 32, 33 auf ihren jeweiligen Schenkeln auf, wobei diese Rasteinrichtungen im vorliegenden Ausführungsbeispiel durch Kerben gebildet werden, die im wesentlichen parallel zum Boden des Gehäuses 16 ausgebildet sind. In den Rasteinrichtungen 32, 33 bzw. Kerben sitzt jeweils eine Schaltfeder 17, 18, die eine im wesentlichen rechteckige, rahmenförmig ausgebildete Grundfläche aufweist, vgl. Fig. 6 und 7. Die Schaltfedern 17, 18 werden durch geeignet gewähltes metallisches Federmaterial gebildet und stellen ein Stanzteil dar, das derart ausgebildet ist, daß in den material- bzw. werkstofffreien Innenbereich 25 von einer Schmalseite 26 her ein im Querschnitt wellenförmig ausgebildeter Steg hineinsteht, vgl. Fig. 6 und 7. Das freie Ende 28 des Stegs 27 und die andere Schmalseite 29 der Schaltfeder 17, 18 ergreift den Schaltfederhalter 30, 31 im Bereich der nutenförmig ausgebildeten Rasteinrichtungen 32, 33. Durch geeignete Wahl und Ausbildung des wellenförmigen Querschnitts des Stegs 27 wird die Schaltfeder 17, 18, nachdem sie mit den Schaltfederhalter 30, 31 in Eingriff gebracht worden ist, vorgespannt, und zwar in Richtung auf entsprechenden Ruhe- bzw. Arbeitskontakte 44, 46; 45, 47. Die Ruhe- bzw. Arbeitskontakte 44, 46; 45, 47 können ebenfalls integral mit entsprechenden Steckereinrichtungen 36 ausgebildet sein und stehen in Richtung der Unterseite 37 aus dem Gehäuse 16 heraus. An der einen ersten Schmalseite 26 der Schaltfeder 17, 18 ist ein Kontakt 19, 20 angebracht, der mit den vorerwähnten Ruhe- bzw. Arbeitskontakten 44, 46; 45, 47 in Berührung kommt, wenn über die Wipptaste 11 ein Betätigungselement 21, 22 betätigt wird.

Das Betätigungselement 21, 22, das auf das entsprechende Schaltelement 14, 15 wirkt, ist im wesentlichen senkrecht zu diesen angeordnet, wobei das Betätigungselement, das als durch die Wipptaste 11 ausgelöster Stößel wirkt, gelenkig an der Wipptaste 11 angelenkt und in Führungen 23, 24 hin und her beweglich ist, die als Teil des Gehäuses 16 ausgebildet sein können. Die entsprechende Anlenkung der hier in Form flacher Plättchen ausgebildeten Betätigungselemente 21, 22 an der Wipptaste 11 bestehen aus U-förmigen Schienen 48, 49, die an der zum Gehäuse 16 weisenden Innenseite der Wipptaste 11 angeordnet sind. Die der Wipptaste 11 abgewandte Seite der plättchenförmigen Betätigungselemente 21, 22 steht lediglich auf der im wesentlichen flach ausgebildeten Schaltfeder 18, 19 auf, und zwar im Bereich zwischen den beiden U-förmigen Haltestegen 34, 35 des Schaltfederhalters 30, 31. Die in die Mitte des Gehäuses 16 weisende eine Rasteinrichtung 33 ist im Vergleich zu der nach außen weisenden Rasteinrichtung 32 in vertikaler Richtung bei Betrachtung der Darstellung von Fig. 6 nach unten versetzt angeordnet, so daß der Abstand der Rasteinrichtung 33 im Vergleich zum Abstand der Rasteinrichtung 32 in bezug auf einen gedachten Gehäuseboden geringer ist. Dadurch wird erreicht, daß die von den Haltestegen 34, 35 bzw. den Rasteinrichtungen 32, 33 aufgenommenen Schaltfedern 17, 18 bei waagerechter Wipptaste 11, d.h. der Ruhestellung des Tastschalters 10, aufgrund der Vorspannung des wellenförmig ausgebildeten Steges 27 Ruhestellung erreichen, in der die Schaltkontakte 19, 20 der Schaltfedern 17, 18 mit den jeweiligen Ruhekontakten 44, 46 verbunden sind. Bei Betätigung des Wipptasters 11 in eine erste Schaltstellung 12, vgl. Fig. 6, wird, durch die Wipptaste 11 bedingt, das Betätigungselement 22 in den Führungen 23, 24 geführt im wesentlichen vertikal nach unten bewegt, so daß die Schaltfeder 18 aufgrund der geeignet gewählten wellenförmigen Querschnittsausbildung des Steges 27 mit einer vorbestimmten Kraft mit seinem Schaltkontakt auf den entsprechenden festen Schaltkontakt 45, 47 bewegt wird, und zwar unabhängig von der Kraft, mit der die Wipptaste 11 durch die sie betätigende Person bewegt wird. Da durch die erfindungsgemäße Ausbildung der Schaltfeder 17, 18 kein Hin- und Herschleudern des freien Endes der Schaltfeder 17, 18 mit dem entsprechenden Schaltkontakten 19, 20 erfolgt, sondern mit einer bestimmten Minimalkraft der aktive Schaltkontakt 20 auf dem entsprechenden Arbeitskontakt 45, 47 liegt und dort gehalten wird, können auf einfachste Weise hohe elektrische Ströme nicht nur kurzzeitig geschaltet werden, so daß der erfindungsgemäße Tastschalter 11, wenn er als Fensterhebeschalter für die Fenster von Kraftfahrzeugen benutzt wird, kein gesondertes Dazwischenschalten von Leistungsrelais erforderlich macht.

Wird die Wipptaste 11 losgelassen, erfolgt aufgrund der geeignet gewählten Federvorspannung der Schaltfeder 17, 18 eine dadurch bedingte Aufwärtsbewegung des Betätigungselementes 20, so daß der Wippschalter 11 sich wieder in eine normale, im wesentlichen waagerechte Ruhelage begeben kann. Es versteht sich von selbst, daß beide Schaltstellungen 12, 13 des Tastschalters 10 auf gleiche Weise mit den gleichen Mitteln erreicht werden, so daß eine gesonderte Beschreibung des im bezug auf die Funktion nicht gesondert beschriebenen anderen Schaltelements nicht erforderlich ist.

Im Bereich zwischen den Schaltelementen 14, 15 und der Wipptaste 11, die wenigstens im Bereich ihrer Symbole, vgl. Fig. 4, teilweise lichttransparent ist, ist ein Leuchtelement 39 in einem schalenförmigen, zur Wipptaste 11 hin offenen Reflektor angeordnet. Ober das Leuchtelement 39 kann der jeweilige Betätigungszustand des Wipptasters 11 angezeigt werden oder aber auch generell der Wipptaste 11 kenntlich gemacht werden, wenn Dunkelheit herrscht. Das Leuchtelement 39 kann beispielsweise eine Leuchtdiode beliebiger Farbe oder auch eine miniaturisierte Glühbirne sein.

Die Wipptaste 11, das Gehäuse 16, der Mantel 38 sowie der Mantel 41 können aus spritzgußfähigem Kunststoff hergestellt sein, beispielsweise auch aus glasfaserverstärktem Polyamid. Grundsätzlich ist aber jede beliebige andere geeignete Art des Kunststoffs mit und ohne Verstärkung möglich. Die eigentlichen Schaltfedern 17, 18 sind aus geeigneten metallischen Federmaterialien, beispielsweise Federbronze, hergestellt. Die Kontakte bzw. Steckereinrichtungen 36, einschließlich derjenigen, die mit den Schaltfederhaltern 30, 31 integral verbunden sind, bestehen aus metallischen Werkstoffen, beispielsweise aus geeigneten Messinglegierungen.

Neben den vier Wipptasten 11, 110, 111, 112 mit ihren ihnen jeweils zugeordneten Schaltelementen 14, 15; 140, 150, 141, 151; 142, 152; 143, 153, ist im Gehäuse 16 ein Sperrschalter 52 angeordnet. Der Sperrschalter 52 dient der elektrischen Sperrung eines oder mehrerer, von dem in der Regel in der Konsole des Kraftfahrzeuges angeordneten Haupttastschalter 10 abgesetzten parallel geschalteten Tastschalter bzw. geschalteter Tastschalter, die in der Regel im Fond eines Fahrzeuges zur Betätigung der hinteren Fahrzeugfenstern angeordnet sind. Dieser Sperrschalter 52 dient somit der Sicherung vor unbefugtem Benutzen der beiden hinteren, im Fond des Fahrzeuges angeordneten Fenster und auch als Kindersicherung. Der Sperrschalter 52 ist in der Regel als Rastschalter ausgebildet, d.h. er besitzt eine erste oder untere rastende Stellung und kann durch nochmaliges Betätigen wiederum aus dieser Raststellung in die Ausgangsstellung überführt werden. Der Sperrschalter 52 bzw. dessen Betätigungselement kann lichttransparent ausgebildet sein, so daß ein im Gehäuse 16 angeordnetes Leuchtelement 53 zur Anzeige seines Schaltzustandes dienen kann.

### Bezugszeichenliste

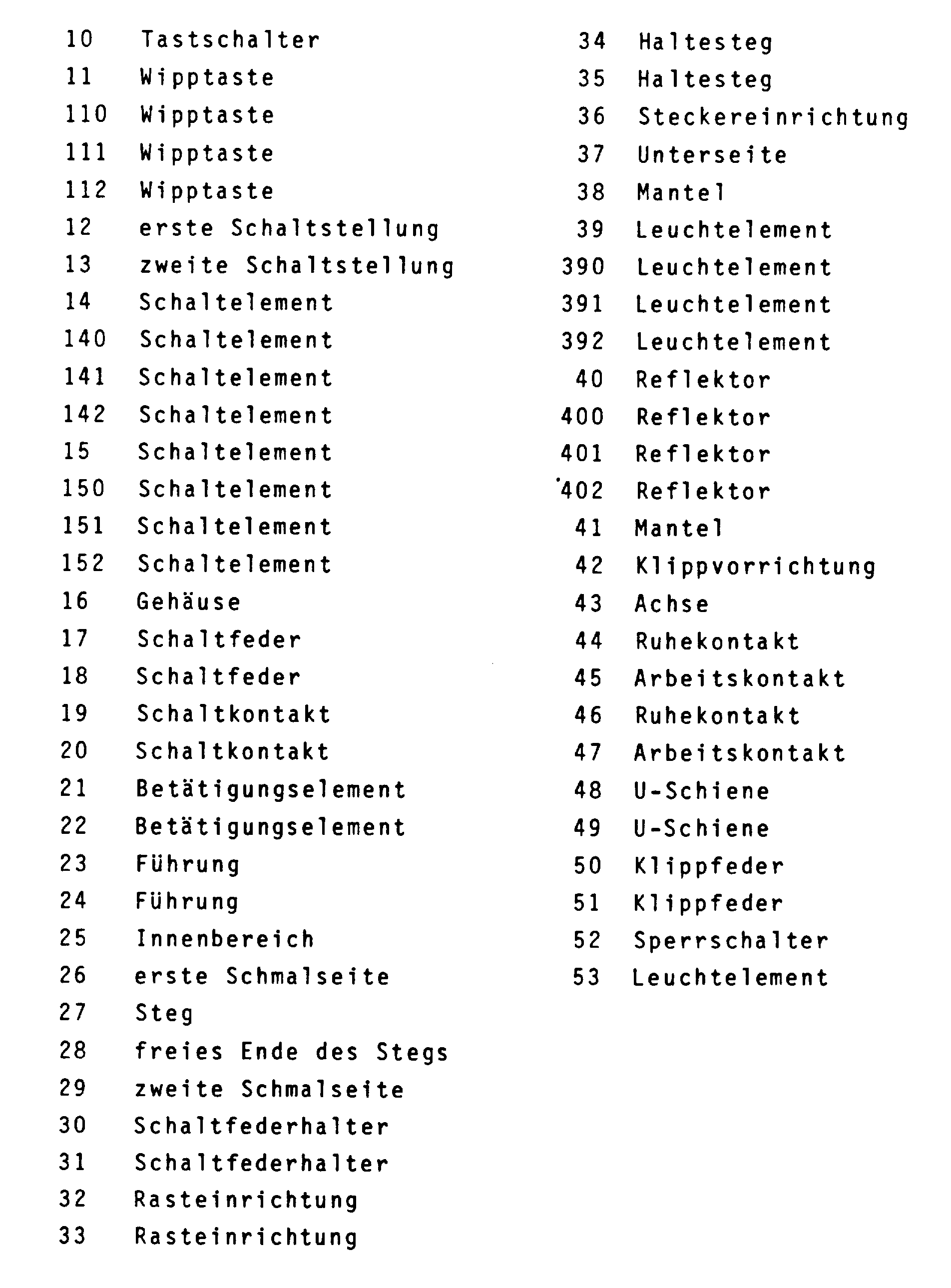

## Patentansprüche

1. Tastschalter (10) mit zwei von einer Ruhestellung aus mittels einer betätigbaren Wipptaste (11, 110) einnehmbaren Schaltstellungen, insbesondere für die Betätigung von Fenstern in Kraftfahrzeugen, umfassend ein auch der Aufnahme von Schaltelementen (14, 140) dienendes Gehäuse (16), wobei die Schaltelemente (14, 140) mit Schaltkontakten (19, 20) versehene Schaltfedern (17, 18) aufweisen, und daß wenigstens zwei mittels je einer gesonderten Wipptaste (11, 110) betätigbare gesonderte Schaltelemente (14, 140) im Gehäuse (16) aufgenommen sind, dadurch gekennzeichnet, daß Schaltfederhalter (30, 31) einstückig mit einer aus dem Gehäuse (16) herausgeführten Steckereinrichtung (36) verbunden sind.

2. Tastschalter nach Anspruch 1, dadurch gekennzeichnet, daß vier mittels je einer gesonderten Wipptaste (11; 110; 111; 112) betätigbare gesonderte Schaltelemente (14, 15; 140, 150; 141, 151; 142, 152) im Gehäuse (16) aufgenommen sind.

3. Tastschalter nach einem oder beiden der Ansprüche 1 bis 2, dadurch gekennzeichnet, daß die im wesentlichen eben ausgebildeten Schaltfedern (17, 18) durch im wesentlichen rechtwinklig zu diesen angeordnete, als Stößel wirkende Betätigungselemente (21,22), die gelenkig an der Wipptaste (11; 110; 111; 112) angelenkt sind, beaufschlagt werden.

4. Tastschalter nach einem oder mehreren der Ansprüche 1 bis 3, dadurch gekennzeichnet, daß die Betätigungselemente (21, 22) in Form flacher Plättchen ausgebildet sind.

5. Tastschalter nach einem oder mehreren der Ansprüche 1 bis 4, dadurch gekennzeichnet, daß die Betätigungselemente (21, 22) an zwei gegenüberliegenden Seiten in Führungen (23, 24) längsverschieblich aufgenommen werden.

6. Tastschalter nach einem oder mehreren der Ansprüche 1 bis 5, dadurch gekennzeichnet, daß die Schaltfedern (17, 18) eine im wesentlichen rechteckige, rahmenförmig ausgebildete Grundfläche aufweisen, wobei in den materialfreien Innenbereich (25) von einer Schmalseite (26) der Schaltfedern (17, 18) aus ein im Querschnitt wellenförmig ausgebildeter Steg (27) hineinsteht.

7. Tastschalter nach Anspruch 6, dadurch gekennzeichnet, daß der Schaltfederhalter (30, 31) zwischen dem freien Ende (28) des Stegs (27) und der anderen Schmalseite (29) der Schaltfeder (17,18) ergriffen wird.

8. Tastschalter nach Anspruch 7, dadurch gekennzeichnet, daß die Schaltfedern (17, 18) durch zwei Rasteinrichtungen (32, 33) ausweisende Haltestege (34, 35) des Schaltfederhalters (30, 31) gehalten werden.

9. Tasteinrichtung nach einem oder mehreren der Ansprüche 1 bis 8, dadurch gekennzeichnet, daß durch das Gehäuse (16) an der der Wipptaste (11) gegenüberliegenden Seite (37) in eine Buchseneinrichtung einbringbare Steckereinrichtungen (36) hindurchtreten.

10. Tastschalter nach Anspruch 9, dadurch gekennzeichnet, daß die Steckereinrichtungen (36) durch einen im wesentlichen zu diesen parallelen Mantel (38) umgeben sind.

11. Tastschalter nach einem oder mehreren der Ansprüche 1 bis 10, dadurch gekennzeichnet, daß im Bereich zwischen den Schaltelementen (14, 15; 140, 150; 141, 151; 142, 152) und der Wipptaste (11) ein Leuchtelement (39) in einem schalenförmigen, zur Wipptaste (11) hin offenen Reflektor (40) angeordnet ist.

12. Tastschalter nach einem oder mehreren der Ansprüche 1 bis 11, dadurch gekennzeichnet, daß die Schaltelemente (14, 15; 140, 150; 141, 151; 142, 152) von einem mit dem Gehäuse (16) verklippbaren Mantel (41) umgeben sind.

13. Tastschalter nach einem oder mehreren der Ansprüche 1 bis 12, dadurch gekennzeichnet, daß dieser in seinem Gehäuse (16) einen Sperrschalter (52) zur elektrischen Sperrung eines oder mehrerer, von einem ersten Tastschalter (10) abgesetzten(r) Tastschalters (Tastschalter) aufweist.

14. Tastschalter nach Anspruch 13, dadurch gekennzeichnet, daß dem Sperrschalter (52) im Gehäuse (16) ein Leuchtelement (53) zur Anzeige seines Schaltzustandes zugeordnet ist.

## Claims

1. Push-button switch (10) with two switching positions actuated from a neutral position by means of a two-way tilting button (11, 110) particularly for operating vehicle windows, comprising a casing (16) containing the switch mechanisms (14, 140), whereby the switch mechanisms (14, 140) present switching springs (17, 18) provided with switching contacts (19, 20) and at least two separate switch mechanisms (14, 140) each actuated with a separate two-way tilting button (11, 110) are contained in the casing (16), characterized in that the switching spring supports (30, 31) are joined in one piece to a plug fitting (36) which projects from the casing (16).

2. Push-button switch according to Claim 1, characterized in that four separate switch mechanisms (14, 15; 140, 150; 141, 151; 142, 152) each actuated by means of a separate two-way tilting button (11; 110, 111; 112) are contained in the casing (16).

3. Push-button switch according to one or both of Claims 1 and 2, characterized in that the substantially flat switching springs (17, 18) are impinged upon by actuating members (21, 22) acting as tappets, which are positioned substantially perpendicular to the switching springs and are flexibly linked to the two-way tilting button (11; 110; 111; 112).

4. Push-button switch according to one or more of Claims 1 to 3, characterized in that the actuating members (21, 22) are designed in the form of flat lamina.

5. Push-button switch according to one or more of Claims 1 to 4, characterized in that the actuating members (21, 22) are retained in guides (23, 24) on two opposite sides which permit longitudinal movement.

6. Push-button switch according to one or more of Claims 1 to 5, characterized in that the switching springs (17, 18) present a substantially rectangular bade formed as a frame, whereby a web (27), substantially wave-shaped in cross-section, projects into the material-free inner area (25) from a narrow side (26) of the switching springs (17, 18).

7. Push-button switch according to Claim 6, characterized in that the switching spring support (30, 31) is gripped between the free end (28) of the web (27) and the other narrow side (29) of the switching spring (17, 18).

8. Push-button switch according to Claim 7, characterized in that the switching springs (17, 18) are held in the switching spring support (30, 31) by two retaining fins (34, 35) which present locking notches (32, 33).

9. Push-button switch according to one or more of claims 1 to 8, characterized in that on the opposite side (37) to the two-way tilting switch (11) plug fittings (36) project through the casing (16) which can be inserted into a socket fitting.

10. Push-button switch according to Claim 9, characterized in that the plug fittings (36) are surrounded by a covering (38) which is substantially parallel to them.

11. Push-button switch according to one or more of Claims 1 to 10, characterized in that a light (39) mounted in a dish-shaped reflector (40) facing towards the two-way tilting button (11) is positioned in the area between the switching mechanisms (14, 15; 140, 150; 141, 151; 142, 152) and the two-way tilting button (11).

12. Push-button switch according to one or more of Claims 1 to 11, characterized in that the switching mechanisms (14, 15; 140, 150; 141, 151; 142, 152) are surrounded by a covering (41) which may be clipped onto the casing (16).

13. Push-button switch according to one or more of Claims 1 to 12, characterized in that it presents a disabling switch (52) in its casing (16) for electrically disabling one or more switches located at a distance from a first push-button switch (10).

14. Push-button switch according to Claim 13, characterized in that a light (53) is positioned in the casing (16) in order to indicate the switched state of the disabling switch (52).

## Revendications

1. Commutateur (10) comprenant deux crans de commutation qui peuvent être atteints à partir d'une position de repos au moyen d'une touche basculante (11, 110) pouvant être manoeuvrée, en particulier pour l'actionnement de fenêtres dans des véhicules automobiles, incluant un logement (16) servant aussi à la réception d'éléments de circuit (14, 140), les éléments de circuit (14, 140) comportant des ressorts de commutation (17, 18) pourvus de contact de commutation (19, 20), au moins deux éléments de circuit (14, 140) placés dans le logement (16), pouvant être manoeuvrés séparément chacun au moyen d'une touche basculante séparée (11, 110), caractérisé en ce que des appuis pour les ressorts de commutation (30, 31), sont reliés de manière intégrale avec un dispositif de connection (36) qui est sorti à l'extérieur du logement (16).

2. Commutateur selon la revendication 1, caractérisé en ce que quatre éléments de circuit (14, 15; 140, 150; 141, 151; 142, 152), pouvant être manoeuvrés séparément chacun au moyen d'une touche basculante séparée (11, 110; 111; 112), sont placés dans le logement (16).

3. Commutateur selon l'une ou deux des revendications 1 à 2, caractérisé en ce que les ressorts de commutation (17, 18) réalisés sensiblement dans le même plan, sont commandés par l'intermédiaire d'éléments d'actionnement (21, 22) agissant comme des poussoirs, qui sont disposés sensiblement perpendiculaires aux ressorts, et qui sont articulés de façon souple sur les touches basculantes (11; 110; 111; 112).

4. Commutateur selon l'une ou plusieurs des revendications 1 à 3, caractérisé en ce que les élements d'actionnement (21, 22) sont réalisés sous forme de lamelles plates.

5. Commutateur selon l'une ou plusieurs des revendications 1 à 4, caractérisé en ce que les éléments d'actionnement (21, 22) sont insérés dans des guides (23, 24) au niveau de deux de leurs côtés opposés, et sont susceptibles de s'y déplacer.

6. Commutateur selon l'une ou plusieurs des revendications 1 à 5, caractérisé en ce que les ressorts de commutation (17, 18) présentent une surface de base sensiblement rectangulaire, réalisée sous forme d'un cadre, une traverse (27) réalisée sous forme ondulée en section transversale, pénétrant dans la zone intérieure (25) vide de matière d'un côté étroit (26) des ressorts de commutation (17, 18).

7. Commutateur selon la revendication 6, caractérisé en ce que les appuis pour ressorts de commutation (30, 31) sont en prise entre l'extrémité libre (28) de la traverse (27) et l'autre côté étroit (29) des ressorts de commutation (17, 18).

8. Commutateur selon la revendication 7, caractérisé en ce que les ressorts de commutation (17, 18) prennent appui sur des barres (34, 35) de l'appui des ressorts (30, 31), présentant des dispositifs à encoches (32, 33).

9. Commutateur selon l'une ou plusieurs des revendications 1 à 8, caractérisé en ce que des dispositifs de connection (36) encastrables pénètrent à l'intérieur d'une douille, par l'intermédiaire du logement (16), au niveau du côté opposé à la touche basculante (11).

10. Commutateur selon la revendication 9, caractérisé en ce que les dispositifs de connection (36) sont entourés par d'une enveloppe (38) sensiblement parallèle à ceux-ci.

11. Commutateur selon l'une ou plusieurs des revendications 1 à 10, caractérisé en ce que, dans la zone comprise entre les éléments de commutation (14, 15; 140, 150; 141, 151; 142, 152) et la touche basculante (11), est disposé un élément lumineux (39) dans un réflecteur (40) en forme de cuvette, ouvert vers la touche basculante (11).

12. Commutateur selon l'une ou plusieurs des revendications 1 à 11, caractérisé en ce que les éléments de commutation (14, 15; 140,150; 141, 151; 142, 152) sont entourés au moyen d'une enveloppe (41) pouvant être clipsée au logement (16).

13. Commutateur selon l'une ou plusieurs des revendications 1 à 12, caractérisé en ce que celui-ci présente, dans son logement (16), un verrou commutateur (52) permettant la coupure électrique d'un ou plusieurs commutateurs dégagés par rapport à un premier commutateur (10).

14. Commutateur selon la revendication (13), caractérisé en ce qu'un élément lumineux (53) est associé au verrou commutateur (52) dans le logement (16), afin d'indiquer son état de commutation.
